# EUROPEAN PATENT APPLICATION

(11) **EP 4 252 919 A1**
(43) Date of publication of application: **04.10.2023**
(21) Application number: 23161555.0
(22) Date of filing: 13.03.2023
(51) Int. Cl.: B05B 13/04, B05B 12/08, B05B 15/55, B05B 15/58, B25J 9/16, B25J 11/00, B05B 9/04

(54) **A ROBOT FOR COATING A VEHICLE BODY**

(30) Priority: 28.03.2022 JP 2022052328
(71) Applicant: ABB Schweiz AG, 5400 Baden (CH)
(72) Inventor: IIDA, Kisumi, Tokyo, 1416022 (JP); TAWATA, Takahiro, Tokyo, 1416022 (JP); UMEZAWA, Norio, Tokyo, 1416022 (JP)
(74) Representative: Zimmermann & Partner Patentanwälte mbB

(57) **Abstract**

The present invention aims to suppress pressure fluctuations and vibration of the multi-axis arm of a coating robot during its operation, thereby preventing deterioration of coating quality caused by the coating head. Therefore, a robot for coating a vehicle body is provided. The robot has a coating head configured for dispensing a coating material onto the vehicle body, a supply device that has a circulation path for circulating the coating material between a reservoir storing the coating material and the coating head, and that is capable of controlling the pressure of the coating material flowing through the circulation path, and an arm having the coating head and the supply device, and being a robot for coating robot a vehicle body that coats the vehicle body while moving the coating head in a main scanning direction by operation of the arm, wherein it has control means for controlling the movement of the arm, and the coating head moves at a first speed toward a coating start position where the coating of the vehicle body is started by the movement of the arm by the control means, and when the coating head reaches a specific position provided in a movement path to the coating start position, the coating head moves at a second speed different from the first speed.

## Description

### TECHNICAL FIELD

This invention relates to a robot for coating a vehicle body which is equipped with a coating head having multiple nozzles that spray out a coating material.

### BACKGROUND

There is a widespread technology for coating vehicle bodies using a coating robot equipped with coating heads having multiple nozzles to dispense a coating material. Such a coating robot has a multi-axis arm having, for example, multiple arm members and a movable shaft connecting each arm member to one another, and of the multiple arm members, a coating head is provided in the arm member that is the tip, and a supply device for supplying a coating material to the coating head is provided (see, for example, Patent Document 1). The coating material supply device includes, for example, a tank for storing coating material, a supply path for supplying coating material to the coating head, and a return flow path for refluxing coating material not used by the coating head to the tank, so that the coating material is circulated between the tank and the coating head. The coating material supply device also includes a supply pump that pumps coating material into the supply path and a retraction pump that draws coating material into the return flow path, which is controlled based on the detection results of the detection means provided in the supply path and the return flow path. As a result, during operation of the coating robot, the pressure of the coating material flowing through the supply path and return flow path can be kept at the proper pressure.

### PRIOR ART DOCUMENTS

WO 2021/040005

### SUMMARY OF THE INVENTION

When coating with a coating robot, a coating head of the coating robot is moved forward and backward, for example, multiple times in the main scanning direction by operation of a multi-axis arm of the coating robot, and is also moved a predetermined amount in the sub-scanning direction each time it is moved in the main scanning direction. In such a multi-axis arm operation, the pressure of the coating material flowing through the coating material supply device will easily fluctuate due to acceleration at the start of operation, deceleration at the stopping of movement, and vibration of the multi-axis arm itself. Such coating material pressure fluctuations destabilize the coating material supply to the coating head and cause variations in the amount of coating material dispensed from the multiple nozzles provided on the coating head. In addition, the vibration of the multi-axis arm itself disrupts the landing position of the coating material ejected from the multiple nozzles provided on the coating head. Due to these causes, the coating quality of the vehicle body by coating heads deteriorates.

To solve the problems described above a robot for coating a vehicle as set out in the appended set of claims is provided. The problems are solved by a robot for coating a vehicle capable of inhibiting deterioration of coating quality by inhibiting pressure fluctuations and vibrations of the multi-axis arm during operation of the multi-axis arm of the coating robot.

According to an embodiment, a robot for coating the vehicle body is provided. The robot has a coating head configured for dispensing a coating material onto the vehicle body; a supply device that has a circulation path for circulating the coating material between a reservoir storing the coating material and the coating head, and that is capable of controlling the pressure of the coating material flowing through the circulation path; and an arm having the coating head and the supply device; and being a robot for coating a vehicle body that coats the vehicle body while moving the coating head in a main scanning direction by operation of the arm, wherein: the robot has a control means for controlling operation of the arm; and the coating head moves at a first speed toward a coating start position where the coating of the vehicle body is started by the movement of the arm by the control means, and when the coating head reaches a specific position provided in the movement path to the coating start position, the coating head moves at a second speed different from the first speed.

In addition, the second speed is set to be less than the first speed, or the first speed is set to be less than the second speed.

In addition, when the coating head reaches the coating start position, coating of the vehicle body is started while maintaining the second speed.

In addition, the coating head moves forward and backward multiple times in the main scanning direction and moves a predetermined amount in a sub-scanning direction orthogonal to the main scanning direction upon switching the forward and backward movement in the main scanning direction; and the coating start position is provided at each of the forward path and backward path in a forward and backward movement of the main scanning direction.

In addition, the coating head is moved at a third speed that is slower than the second speed when moving a predetermined amount in the sub-scanning direction.

According to an embodiment, a robot for coating a vehicle body is provided. The robot has a coating head configured for dispensing a coating material onto the vehicle body; a supply device that has a circulation path for circulating the coating material between a reservoir storing the coating material and the coating head, and that is capable of controlling the pressure of the coating material flowing through the circulation path; and an arm having the coating head and the supply device; and being a robot for coating a vehicle body that coats the vehicle body while moving the coating head in a main scanning direction by operation of the arm, wherein: the robot has a control means for controlling operation of the arm; the coating head is moved to a coating start position to start coating of the vehicle body by controlling the arm by the control means, stopped temporarily and then resumes movement from the coating start position to the main scanning direction after a predetermined time has elapsed since stopping at the coating start position to perform coating of the vehicle body, and the movement speed of the coating head when coating the vehicle body is set to a movement speed different from the movement speed of the coating head when moving to the coating start position.

In addition, the coating head moves forward and backward multiple times in the main scanning direction and moves a predetermined amount in a sub-scanning direction orthogonal to the main scanning direction upon switching the forward and backward movement in the main scanning direction; the coating start position is provided at each of the forward path and backward path in a forward and backward movement in the main scanning direction; and the coating head is temporarily stopped at the coating start position provided at each of the forward path and backward path.

In addition, the coating head is held at an initial position when not coating the vehicle body; and the control means controls operation of the arm to move the coating head from the initial position to the coating start position upon initiation of coating to the vehicle body.

In addition, the circulation path includes a supply path for supplying the coating material stored in the reservoir to the coating head and a return flow path for refluxing the coating material not used by the coating head to the reservoir; and the coating device has a dispensing means for feeding the coating material stored in the reservoir to the supply path; a retracting means for drawing the coating material from the coating head into the return flow path; a first detection means for detecting the pressure of the coating material fed to the supply path; a second detection means for detecting the pressure of the coating material drawn into the return flow path; a pressure control means for controlling the amount of coating material dispensed by the dispensing means based on a detection result by the first detection means and for controlling a drawing amount of the coating material by the retracting means based on a detection result by the second detection means.

According to this invention, it is possible to provide a robot for coating a car body by suppressing pressure fluctuation and vibration of the multi-axis arm that occurs during the operation of the multi-axis arm, thereby inhibiting deterioration of coating quality by the coating head.

### BRIEF DESCRIPTION OF DRAWINGS

[Figure 1] (a) is a top view showing the configuration of a vehicle body coating robot according to this invention, and (b) is a side view of the vehicle body coating robot shown in (a).
[Figure 2] is a diagram showing an example of the configuration of a coating material circulation device.
[Figure 3] is a diagram showing an example of the configuration of a control system.
[Figure 4] (a) shows an example of a moving trajectory on the xy plane of a coating head, and (b) shows an example of a moving trajectory on the xz plane of the coating head.
[Figure 5] is a diagram showing an example of a change in the movement speed of the coating head.
[Figure 6] (a) shows the displacement of the pressure value at the input side of the coating head when the coating head is coated at position P2, and (b) shows the displacement of the pressure value at the output side of the coating head when the coating head is coated at position P2.
[Figure 7] (a) shows the displacement of the pressure value at the input side of the coating head when the coating head is coated at position P4, and (b) shows the displacement of the pressure value at the output side of the coating head when the coating head is coated at position P4.
[Figure 8] is a diagram showing an example of the movement speed of the coating head between position P4 and position P5.
[Figure 9] (a) shows the displacement of the pressure value at the input side of the coating head when coating the vehicle body after stopping the coating head at the coating start position for a predetermined time, and (b) shows the displacement of the pressure value at the output side of the coating head when coating the vehicle body after stopping the coating head at the coating start position for a predetermined time.

### DETAILED DESCRIPTION

A robot 10 for coating a vehicle body which implements this invention will be described below on the basis of the drawings. The robot 10 for coating a vehicle body is hereinafter referred to as a coating robot 10. The coating robot 10 of this embodiment is arranged to the side of a coating line in an automobile manufacturing plant and is used for coating vehicle bodies FR conveyed along the coating line.

Moreover, in this embodiment, the object to be coated by the coating robot 10 (hereinafter referred to as the "object of coating") is an automobile body FR as an example, but the object of coating may also be an automobile part other than a vehicle body (examples include, but are not limited to, doors, hoods, various panels, etc.), or various parts other than automobile parts (for example, airplane or railway exterior parts), and thus is not limited to a vehicle body of an automobile and may be any object that requires coating.

Coating here is performed for the purpose of forming a coating film on the surface of the object of coating to provide protection of that surface and improved appearance. Therefore, coating includes not only the coating of an object of coating using coating material of a specific color or coating material having a specific function, but also the coating of an object of coating using coating materials of multiple colors in sequence. Furthermore, coating includes coating of patterns, illustrations, images, etc.

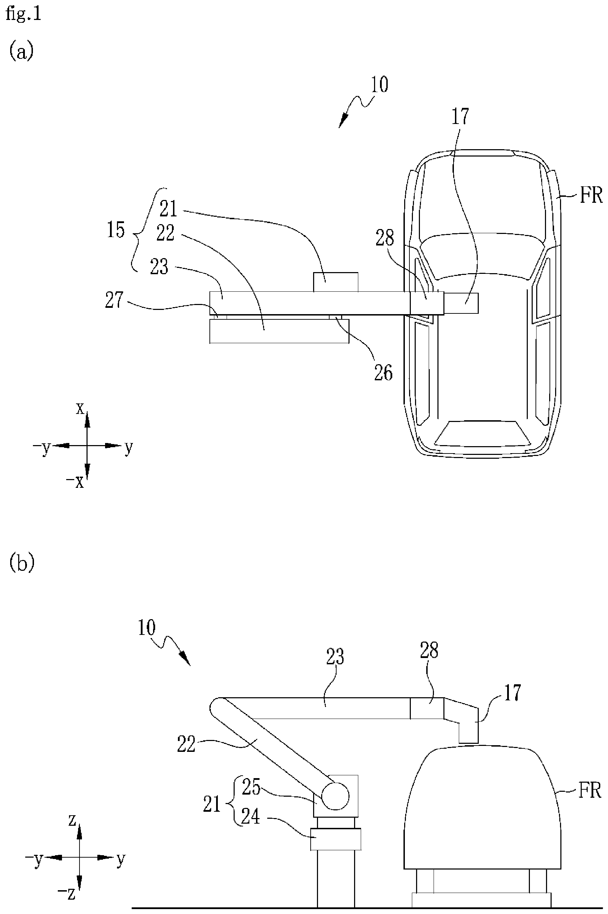

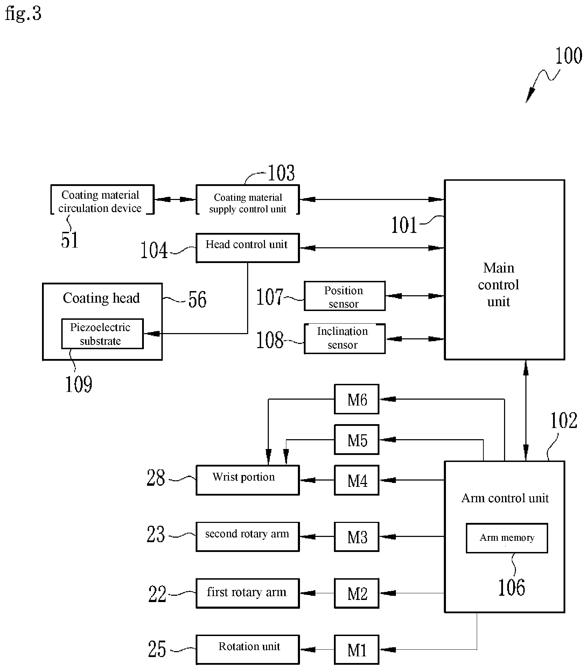

As shown in Figs. 1(a) and 1(b), the coating robot 10 has, by way of example, a robot arm 15 and a coating head unit 17. The robot arm 15 is composed of a multi-axis arm having a base 21 and multiple (two in Fig. 1) arm members 22, 23. The base 21 has a fixed portion 24 and a rotating portion 25 rotatable relative to the fixed portion 24. Here, base 21 corresponds to the base described in the Claims. Fixed portion 24 includes a motor M1 (see Fig. 3) inside. The rotating portion 25 rotates as a rotation center in a direction perpendicular to the floor surface of the coating line (hereinafter referred to as the vertical direction) due to the drive of the motor M1.

Hereinafter, among the multiple arm members 22, 23, the arm member 22 coupled to the rotating portion 25 is referred to as the first rotary arm 22, and the arm member 23 coupled to the first rotary arm 22 is referred to as the second rotary arm 23.

The first rotary arm 22 is coupled to the movable shaft 26 provided in the rotating portion 25 at one end in the direction of extension of the first rotary arm 22. The movable shaft 26 provided in the rotating portion 25 is provided with a motor M2 (see Fig. 3) to cause the coupled first rotary arm 22 to rotate on a plane orthogonal to the floor surface of the coating line (e.g., a yz plane when the robot arm 15 is in the state of Fig. 1(b)).

In the direction of extension of the first rotary arm 22, the second rotary arm 23 is coupled via the movable shaft 27 to the other end, which is opposite to the one end coupled to the movable shaft 26 of the rotating portion 25. The movable shaft 27 is provided with a motor M3 (see Fig. 3) as described below to cause the coupled second rotary arm 23 to rotate on a plane orthogonal to the floor surface of the coating line (e.g., a yz plane when the robot arm 15 is in the state of Fig. 1(b)). Moreover, although the illustration is omitted, the center axis of the movable shaft 26 of the rotating portion 25 and the center axis of the movable shaft 27 provided in the first rotary arm 22 are parallel. Moreover, although details will be described below, the second rotary arm 23 is provided with a coating material circulation device 51 as described below.

The other end of the second rotary arm 23 in the direction of extension is provided with a wrist portion 28. The wrist portion 28 holds the coating head unit 17. The wrist portion 28 has multiple motors M4, M5, M6 (3 motors here) each with a different axis direction of the drive shaft, and driving any of these motors causes the held coating head unit 17 to rotate using any one of the multiple shafts that the wrist portion 28 has as a rotation center. It should be noted that the number of shafts should be two or more.

The coating head unit 17 includes a coating head 56 as described below, a head control unit (see Fig. 3) for controlling operation of said coating head 56, and the like.

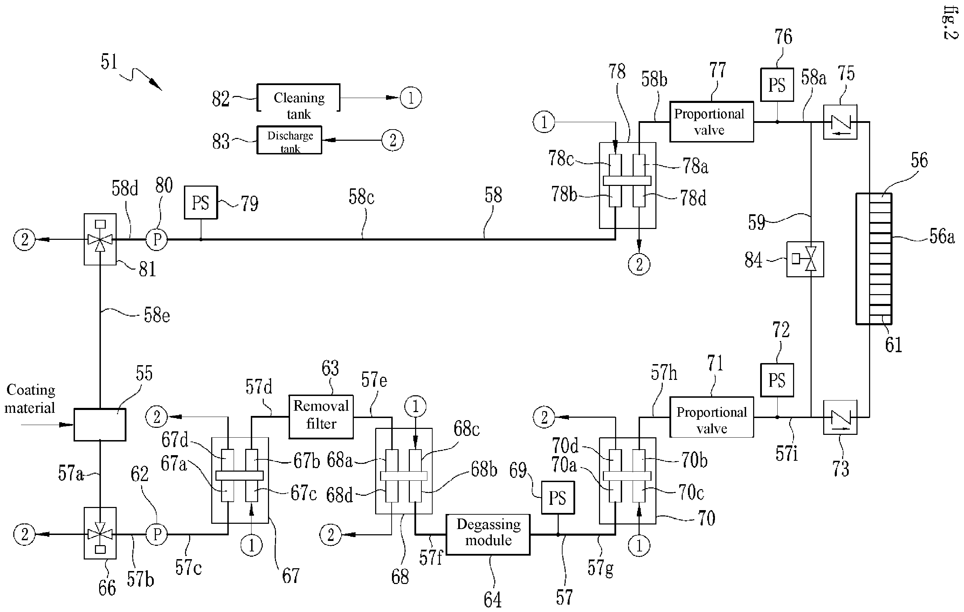

As described above, a coating material circulation device 51 is provided inside the second rotary arm 23. As shown in Fig. 2, the coating material circulation device 51 has, for example, a supply path 57 that supplies coating material stored in the coating material tank 55 to the coating head 56, and a return flow path 58 (reflux path) that returns coating material not used in the coating head 56 to the coating material tank 55 from the coating head 56, and a bypass path 59 that flows from the supply path 57 to the return flow path 58 without supplying coating material to the coating head 56. Here, the coating material tank 55 corresponds to the reservoir as described in the Claims. In addition, the coating material circulation device 51 also mounts a coating material tank 55, gear pump 62 on the floor of coating material room, and houses parts such as, for example, removal filter 63, degassing module 64, switching valves 67, 68, 70, 78, proportional valves 71, 77, and pressure gauges 69, 72, 76, 79, etc. inside the second rotary arm 23. Here, the coating material circulation device 51 corresponds to the supply device as described in the Claims. Moreover, the gear pump 62 may employ a configuration that is housed, for example, within the second rotary arm 23. In addition, a configuration may be employed in which at least one part of the removal filter 63, degassing module 64, switching valve, proportional valve, pressure gauge, and the like is mounted on the floor.

The coating material circulation device 51 circulates coating material between the coating material tank 55 and the coating head 56 by supplying coating material stored in the coating material tank 55 to the coating head 56 when coating the vehicle body FR and refluxing coating material not used in the coating head 56 from the coating head 56 to the coating material tank 55. In addition, when the coating material circulation device 51 is not coating the vehicle body FR, the coating material stored in the coating material tank 55 flows through the supply path 57, bypass path 59, and return flow path 58, in that order, and returns to the coating material tank 55.

By the way, coating materials used for coating the vehicle body FR are water-based coating materials and solvent-based coating materials using pigments, for example. Thus, by circulating the coating material by the coating material circulation device 51, separating the pigments contained in the coating material and agglomerating the pigments is prevented.

When describing the configuration of the supply path 57 of the coating material circulation device 51, the coating material tank 55 side is the upstream side and the coating head 56 side is the downstream side in the coating material supply direction. Moreover, when describing the configuration of the return flow path 58 of the coating material circulation device 51, the coating head 56 side is the upstream side and the coating material tank 55 side is the downstream side.

The coating material tank 55 stores the coating material used for coating the vehicle body FR using the coating head 56. The coating material tank 55 is arranged outside the coating robot 10 (for example, on the floor of the coating room). Moreover, the coating material tank 55 is supplied with coating material from outside as necessary in the process of coating the vehicle body FR using the coating head 56. In addition, if coating material is refluxed from the return flow path 58 to the coating material tank 55, air bubbles flowing with the coating material and floating on a surface of the liquid coating material within the coating material tank 55, may be removed.

The coating head 56 has a nozzle forming surface 56a with multiple nozzles 61 arranged in a two-dimensional array, and the coating material supplied via the supply path 57 is discharged from each of the multiple nozzles 61 to form a coating film on the surface of the vehicle body FR.

Supply path 57 is a path that supplies coating material stored in the coating material tank 55 to the coating head 56. The supply path 57 has flow paths 57a, 57b, ..., 57h, 57i, as described below. In addition, in the middle of the supply path 57, from the upstream side of the supply path 57, the gear pump 62, the removal filter 63, and the degassing module 64 are arranged in this order.

The gear pump 62 draws in the coating material stored in the coating material tank 55 and feeds the drawn-in coating material toward the coating head 56. Therefore, when the gear pump 62 is driven, the pressure on the upstream side of the gear pump 62, i.e. inside the flow paths 57a and 57b between the coating material tank 55 and the gear pump 62, becomes negative, and the coating material stored in the coating material tank 55 is drawn into the flow paths 57a and 57b. It is then fed from the gear pump 62 to the flow path 57c connected to the downstream side of the gear pump 62. Here, the gear pump 62 corresponds to the dispensing means as described in the Claims.

The flow path 57a and flow path 57b that make up the supply path 57 are connected by a three-way valve part 66. The three-way valve part 66 can be switched to either a state in which the flow path 57a and the flow path 57b are in communication or a state in which the flow path 57b is in communication with a drain path connected to the drain tank 83. The three-way valve part 66 is held in communication with the flow path 57a and the flow path 57b, for example, when coating the vehicle body FR. In addition, the three-way valve part 66 is in a state of communicating the flow path 57b and the drain tank 83 (in particular, the flow path not shown in the drawings is connected to the drain tank 83) when cleaning the supply path 57.

In the supply path 57, the gear pump 62 is connected with the flow path 57c at the output side. A switching valve 67 is provided at the downstream side end of the flow path 57c. The switching valve 67 has four valve parts 67a, 67b, 67c, and 67d. For example, the valve part 67a is connected to the flow path 57c, and the valve part 67b is connected to the flow path 57d that is directed to the removal filter 63. In addition, the valve part 67c is connected to the cleaning tank 82 (in detail, the flow path not shown in the drawings is connected to the cleaning tank 82). Furthermore, the valve part 67d is connected to the drain tank 83 (in detail, the flow path not shown in the drawings is connected to the drain tank 83). Of these valves, the valve part 67a and the valve part 67b are normally held in an open state. On the other hand, valve parts 67c, 67d are normally held in a closed state and are switched from a closed state to an open state upon cleaning of the coating material circulation device 51.

A removal filter 63 is provided downstream of the flow path 57d connected to the valve part 67b of the switching valve 67. The removal filter 63 removes foreign matter such as coarse particles and pigment agglomerates contained in the coating material, as well as bubbles that exceed a predetermined size among the bubbles contained in the coating material. The removal filter 63 is for example a mesh-like body such as a metal net or resin net, or a porous body, or a metal plate in which fine through-holes have been formed. Examples of a mesh-like body include metal mesh filters, metal fibers, e.g., fine strands of metal known as SUS made into the form of a felt, metal sintered filters which have been compressed and sintered, electroformed metal filters, electron beam processed metal filters, laser beam processed metal filters, and the like.

A switching valve 68 is provided downstream of the flow path 57e connected to the output side of the removal filter 63. Similarly to the switching valve 67, the switching valve 68 has four valve parts 68a, 68b, 68c, and 68d. For example, the valve part 68a is connected to the flow path 57e, and the valve part 68b is connected to the flow path 57f that is directed to the degassing module 64. In addition, the valve part 68c is connected to the cleaning tank 82 (in detail, the flow path not shown in the drawings is connected to the cleaning tank 82). In addition, the valve part 68d is connected to the drain tank 83 (in detail, the flow path not shown in the drawings is connected to the drain tank 83). Of these valves, the valve part 68a and the valve part 68b are normally held in an open position. On the other hand, the valve parts 68c, 68d are normally held in a closed state and are switched from a closed state to an open state upon cleaning of the coating material circulation device 51.

A degassing module 64 is provided downstream of the flow path 57f connected to the valve part 68b of the switching valve. The degassing module 64 removes (degasses) dissolved gas and air bubbles present in the coating material. Examples of the degassing module 64 include a hollow fiber membrane bundle made by bundling multiple hollow fiber membranes.

A pressure gauge 69 is provided in the flow path 57g connected to the output side of the degassing module 64. The pressure gauge 69 measures the pressure of the coating material dispensed from the degassing module 64. The measurement result by the pressure gauge 69 is output to the coating material supply control unit 103 (see Fig. 3). The gear pump 62 is driven by the coating material supply control unit 103 so that the pressure value detected by the pressure gauge 69 is constant. Moreover, the pressure gauge 69 corresponds to the first detection means as described in the Claims. In addition, in the supply path 57, a pressure gauge other than the pressure gauge 69 may be provided.

At the downstream side end of the flow path 57g described above, a switching valve 70 is provided. Similarly to the switching valve 67 and the switching valve 68, the switching valve 70 has four valve parts 70a, 70b, 70c, and 70d. For example, the valve part 70a is connected to the flow path 57g, and the valve part 70b is connected to the flow path 57h. In addition, the valve part 70c is connected to the cleaning tank 82 (in detail, the flow path not shown in the drawings is connected to the cleaning tank 82). In addition, the valve part 70d is connected to the drain tank 83 (in detail, the flow path not shown in the drawings is connected to the drain tank 83). Of these valves, the valve part 70a and the valve part 70b are normally held in the open state. On the other hand, the valve parts 70c, 70d are normally held in a closed state and are switched from a closed state to an open state upon cleaning of the coating material circulation device 51.

A proportional valve 71 is connected to the downstream side end of the flow path 57h connected to the valve portion 70b of the switching valve. The proportional valve 71 is opened and closed by the coating material supply control unit 103 so that the pressure value of the coating material flowing downstream of the proportional valve 71 is constant.

A flow path 57i is provided downstream of the proportional valve 71. The flow path 57i is provided with a pressure gauge 72 and a one-way valve 73. The pressure gauge 72 measures the pressure of coating material flowing from the proportional valve 71 toward the coating head 56. The one-way valve 73 flows coating material in one direction (in this case, from proportional valve 71 towards the coating head 56) and prevents it from flowing in the opposite direction. Moreover, the upstream side end of the bypass path 59 is connected to the flow path 57h between the pressure gauge 72 and the one-way valve 73.

The return flow path 58 is a flow path that returns coating material not used by the coating head 56 when coating the vehicle body FR, or that is circulated through the bypass path 59 to the coating material tank 55. The return flow path 58 has flow paths 58a, 58b, 58c, 58d, and 58e.

A coating head 56 is connected to the flow path 58a at the upstream side end. The flow path 58a is provided with a one-way valve 75 and a pressure gauge 76. The one-way valve 75 flows coating material in one direction (in this case, from coating head 56 toward pressure gauge 76) and prevents it from flowing in the opposite direction. It should be noted that the downstream side end of the bypass path 59 is connected to the flow path 58a between the one-way valve 75 and the pressure gauge 76. The pressure gauge 76 measures the pressure of the coating material flowing upstream of the proportional valve 77 (i.e., from the coating head 56 toward the proportional valve 77).

A proportional valve 77 is provided downstream of the flow path 58a. The proportional valve 77 is controlled by the coating material supply control unit 103 to open and close and to maintain a constant pressure value of the coating material flowing from the coating head 56 toward the proportional valve 77.

A switching valve 78 is provided downstream of the flow path 58b connected to the output side of the proportional valve 77. Similarly to the switching valves 67, 68, 70 provided in the supply path 57, the switching valve 78 has four valve parts 78a, 78b, 78c, and 78d. For example, the valve part 78a is connected to the flow path 58b, and the valve part 78b is connected to the flow path 58c directed to gear pump 80. In addition, the valve part 78c is connected to the cleaning tank 82 (in detail, the flow path not shown in the drawings is connected to the cleaning tank 82). In addition, the valve part 78d is connected to the drain tank 83 (in detail, the flow path not shown in the drawings is connected to the drain tank 83). Of these valves, valve 78a and valve 78b are normally held in the open position. On the other hand, valves 78c, 78d are normally held in a closed state and are switched from a closed state to an open state upon cleaning of the coating material circulation device 51.

The flow path 58c is provided with a pressure gauge 79. The pressure gauge 79 measures the pressure of the coating material flowing into the flow path 58c. The measurement result by the pressure gauge 79 is output to the coating material supply control unit 103. Moreover, the pressure gauge 79 corresponds to a second detection means as described in the Claims.

A gear pump 80 is provided at the downstream side end of the flow path 58c. The gear pump 80 draws coating material into the flow path 58c and pumps the drawn coating material toward the coating material tank 55. Therefore, by driving the gear pump 80, the pressure inside the upstream side of the gear pump 80, i.e., the flow path 58c, becomes negative, and the coating material is drawn into the flow path 58c. The coating material is then pumped from the gear pump 80 to a flow path 58d connected to the downstream side of the gear pump 80. At this time, the gear pump 80 is driven and controlled by the coating material supply control unit 103 so that the pressure value detected by the pressure gauge 79 is a constant value. Here, the gear pump 61 corresponds to the first pump as described in the Claims.

A three-way valve 81 is connected to the downstream side of the flow path 58d connected to the output side of the gear pump 80. The three-way valve 81 switches between a state in which the flow path 58d is connected to the flow path 58e connected to the coating material tank 55 and a state in which the flow path 58d is connected to the drain tank 83. The three-way valve 81 is kept in the state of connecting the flow path 58d and flow path 58e during coating of the vehicle body FR by the coating head 56 or during circulation of the coating material. The three-way valve 81 switches from connecting the flow path 58d and the flow path 58e to connecting the flow path 58d and the drain tank 83 during cleaning. As a result, the cleaning liquid and air flowing through the flow path 58d are discharged into the drain tank 83 via the three-way valve 81.

The bypass path 59 is connected to the flow path 57i and the flow path 58a to flow a portion of the coating material flowing through the supply path 57 to the return flow path 58 without flowing to the coating head 56 when coating material is not coated by the coating head 56. A control valve 84 is provided in the bypass path 59. The control valve 84 is held closed when coating the vehicle body FR by the coating head 56 and is switched to an open state when coating the vehicle body FR by the coating head 56 is not performed.

Next, a configuration to control the coating robot 10 described above (hereinafter referred to as a control system) will be described. Fig. 3 is a diagram illustrating a configuration of a control system. As shown in Fig. 3, the control system 100 has a main control unit 101, an arm control unit 102, a coating material supply control unit 103, and a head control unit 104. Although the illustration by drawing is omitted, the main control unit 101, the arm control unit 102, the coating material supply control unit 103, and the head control unit 104 are composed of a Central Processing Unit (CPU), a memory part (Read Only Memory (ROM), Random Access Memory (RAM), non-volatile memory, and the like), and other elements.

The main control unit 101 sends predetermined control signals to each of the arm control unit 102, coating material supply control unit 103, and head control unit 104 so that the robot arm 15, coating material circulation unit 51, and coating head 56 cooperate to perform coating on the object to be coated.

The arm control unit 102 provides drive control for each of the motors M1, M2, M3, M4, M5, and M6 provided in the robot arm 15 based on various data stored in the arm memory 106 it owns. Here, various data stored in the arm memory 106 are required when coating the vehicle body FR by the coating robot 10, and includes, for example, data on the external shape of the vehicle body FR to be coated, trajectory data indicating the movement trajectory of the coating head unit 17 when coating the vehicle body FR, posture data indicating the posture of the robot arm 15 and the coating head unit 17, and the like. Here, the arm control unit 102 corresponds to the control means as described in the Claims.

Here, the coating of the vehicle body FR with the coating robot 10 shown in this embodiment is carried out while maintaining the second rotary arm 23 in a horizontal state, i.e., in a state in which the extension direction of the second rotary arm 23 is included in the horizontal plane. Accordingly, the posture data include, for example, the posture of the first rotary arm 22 (the amount of rotation of the motor M1 and the motor M2) when the second rotary arm 23 is maintained in a horizontal state, as well as the posture of the second rotary arm 23 (the amount of rotation of the motor M3) relative to the first rotary arm 22.

It should be noted that various data described above are stored in the arm memory 106 corresponding to each of the multiple vehicle body FRs with different external shapes when coating multiple vehicle body FRs with different external shapes by the coating robot 10.

The coating material supply control unit 103 controls the drive of the gear pumps 62, 80 and the opening and closing of the proportional valves 71, 77 based on the measurement results of the pressure gauges 69, 72, 76, and 79 provided in the coating material circulation device 51 described above to circulate the coating material stored in the coating material tank 55 of the coating material circulation device 51 between the coating material tank 55 and the coating head 56. Here, the coating material supply control unit 103 corresponds to the pressure control means as described in the Claims.

The head control unit 104 operates the piezoelectric substrate 109 based on the position information of the coating head 56 detected by the position sensor 107. Here, the head control unit 104 is not only capable of controlling the operation of the piezoelectric substrate 109, but also capable of controlling the operating frequency relative to the piezoelectric substrate 109, controlling the voltage applied to the piezoelectric substrate 109, and controlling the amount of droplets of coating material ejected from each of the multiple nozzles 61 provided on the nozzle forming surface 56a of the coating head 56.

The position sensor 107 detects the position of the coating head 56 moving under the control of the arm control unit 102 and outputs its detection signal to the main control unit 101. The inclination sensor 108 used can be, for example, a gyro sensor. The inclination sensor 108 detects the inclination of the robot arm 15 and the coating head 56 and outputs the detection signal to the main control unit 101.

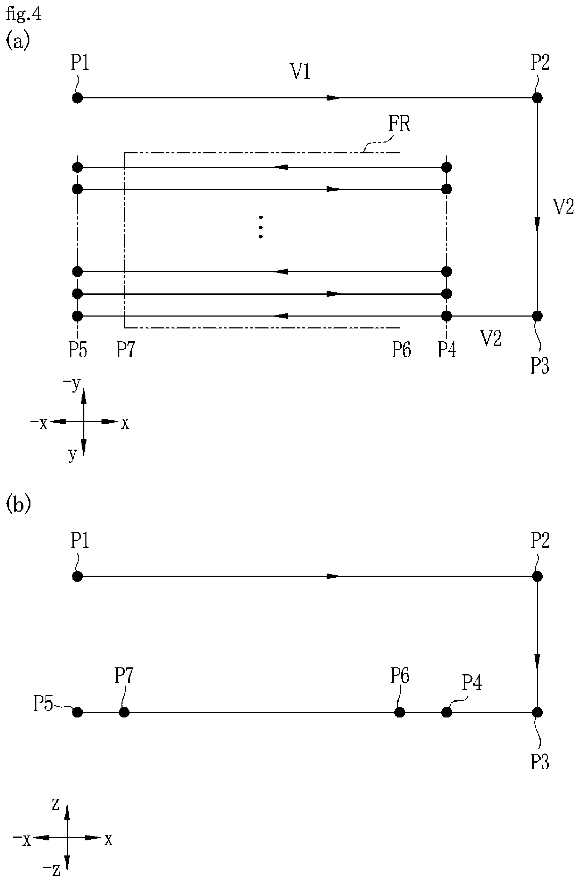

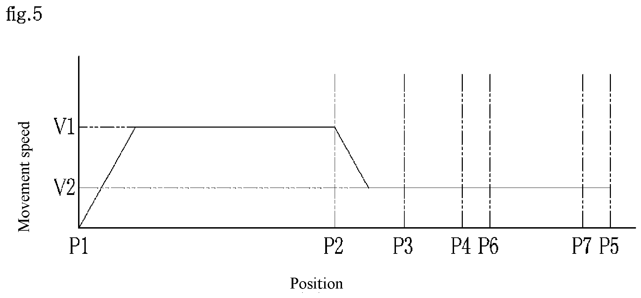

Next, an example of control of the vehicle body FR in coating using the coating robot 10 will be described. Moreover, Fig. 4(a) shows an example of a moving trajectory of coating head 56 on an xy plane when coating onto a vehicle body FR, and Fig. 4(b) shows an example of a moving trajectory of coating head 56 on an xz plane when coating onto a vehicle body FR. In addition, Fig. 5 is also a diagram illustrating an example of a change in the movement speed of the coating head 56 when coating to the vehicle body FR.

As shown in Figs. 4(a) and 4(b), when the coating robot 10 is not coating the vehicle body FR, the coating head 56 is held, for example, in a standby position (position P1 in Fig. 4(a). When coating by the coating robot 10 begins, the arm control unit 102 drives the motors M1, M2, M3, M4, M5, and M6. This causes the first rotary arm 22, the second rotary arm 23, and the wrist portion 28 of the robot arm 15 to operate to move the coating head 56 from position P1 to position P2. Here, assuming the movement speed of the coating head 56 from position P1 to position P2 as V1, the movement speed V1 is, by way of example, V1 = 300 mm/s.

Thereafter, after the coating head 56 reaches position P2, the arm control unit 102 slows down the movement speed of the coating head 56 moving under the drive of motors M1, M2, M3, M4, M5, and M6 to move the coating head 56 from position P2 to position P3. Moreover, as shown in Figs. 4(a) and 4(b), position P3 is in the lower position relative to position P2, and the drive of the robot arm 15 causes the coating head 56 to move on the yz plane. At this time, the coating head 56 can be moved in the y-direction in Fig. 4(a) and then in the -z-direction in Fig. 4(b) (or vice versa), or simultaneously in the y-direction in Fig. 4(a) and in the -z direction in Fig. 4(b). Here, the movement speed V2 of the coating head 56 moving from position P2 to position P3 is set in the range of, for example, 30 mm/s to 100 mm/s.

When the coating head 56 reaches position P3, the arm control unit 102 moves the coating head 56 from position P3 to position P4 without changing the movement speed of the coating head 56 moving under the drive of motors M1, M2, M3, M4, M5, and M6.

For example, in the coating of the vehicle body FR by the coating head 56, forward and backward movement between position P4 and position P5 in the -x direction or in the x direction is performed, and when moving either from position P4 to position P5 or from position P5 to position P4, coating is performed using multiple nozzles 61 provided on the nozzle forming surface 56a (hereinafter coating using all of the multiple nozzles 61 provided on the nozzle forming surface 56a is referred to as coating for one line), and when the coating for one line is completed, the coating head 56 is moved one line in the -y direction. That is, the movement of the coating head 56 from position P4 to position P5 corresponds to the movement of the forward path in the forward and backward movement in the main scanning direction. Also, the movement of the coating head 56 from position P5 to position P4 corresponds to the movement of the backward path in the forward and backward movement in the main scanning direction.

The movement speed when the coating head 56 moves from position P4 to position P5 and the movement speed when moving from position P5 to position P4 is the movement speed V2. The movement speed of the coating head 56 when moving the coating head 56 one line in the -y direction may also be the same speed as the movement speed V2 from position P2 to position P3, or may be less than these movement speeds V2.

When the coating head 56 is moved between positions P4 and P5, i.e., when the coating head 56 moves along a forward path in the forward and backward movement in the main scanning direction, the arm control unit 102 drives M1, M2, M3, M4, M5, and M6 with reference to the data of the contour shape of the vehicle body FR stored in the arm memory 106. Thus, the coating head 56 moves along the contour shape of the vehicle body FR with a predetermined spacing relative to the vehicle body FR.

As the coating head 56 moves from position P4 to position P5, the coating head passes through position P4 to initiate processing prior to coating initiation, and when the coating head 56 reaches one end of the vehicle body FR (position P6), coating material is ejected from the multiple nozzles 61 provided at the nozzle forming surface 56a of the coating head 56. When the coating head 56 is moved to reach the other end of the FR of the vehicle body in the main scanning direction (position P7), the discharge of coating material from the multiple nozzles 61 provided on the nozzle forming surface 56a of the coating head 56 is stopped, and the treatment associated with the end of coating is started, and when the position P5 is reached, the operation of the coating head 56 completely ends.

As the coating head 56 moves to position P5, one line of coating by the coating head 56 ends. The arm control unit 102 then continues to drive the motors M1, M2, M3, M4, M5, and M6 to move the coating head 56 for one line in the -y direction of Fig. 4.

The arm control unit 102 then drives the motors M1, M2, M3, M4, M5, and M6 and changes the posture of the robot arm 15 to move the coating head 56 from position P5 toward position P4. Moreover, the movement speed of the coating head 56 is V2.

When the coating head 56 is moved from position P5 toward position P4, a treatment prior to coating initiation is initiated, and when the coating head 56 reaches the other end of the vehicle body FR (position P7), coating material is dispensed from the multiple nozzles 61 provided on the nozzle forming surface 56a of the coating head 56. Then, when one end of the FR of the vehicle body (position P6) in the main scanning direction is reached, the discharge of coating material from the multiple nozzles 61 provided on the nozzle forming surface 56a of the coating head 56 is stopped, and processing associated with coating completion is started, and when the position P4 is reached, the operation of the coating head 56 completely ends.

That is, when the coating head 56 moves along the forward path in the forward and backward movement in the main scanning direction, position P4 becomes the coating start position and position P5 becomes the coating end position. At this time, the discharge of the coating material by the multiple nozzles 61 of the coating head 56 is performed from position P6 to position P7. In addition, when the coating head 56 moves along the backward path in the forward and backward movement in the main scanning direction, position P5 becomes the coating start position and position P4 becomes the coating end position. At this time, the discharge of the coating material by the multiple nozzles 61 of the coating head 56 is performed from position P7 to position P6.

In the coating of the vehicle body FR, the coating head 56 is moved from position P4 to position P5 (or vice versa) and then moved one line in the -y direction. This sequence is repeated multiple times, particularly until the entire vehicle body is coated. Then, when the entire vehicle body FR is coated and moved to position P5, the arm control unit 102 drives the motors M1, M2, M3, M4, M5, and M6 to move the coating head 56 from position P5 to position P1.

At the time of movement of the coating head 56 described above, based on the detection results of the pressure gauge 69 provided in the supply path 57 of the coating material circulation device 51 and the pressure gauge 79 provided in the return flow path 58, the pressure of the coating material flowing through the supply path 57 and the return flow path 58 is controlled. In addition, the opening and closing control of the proportional valve 71 by the pressure gauge 72 and the opening and closing control of the proportional valve 77 by the pressure gauge 76 are performed.

In performing the coating using the coating robot 10 described above, the pressure supplied to the coating head 56 and the pressure dispensed from the coating head 56 are taken into account below.

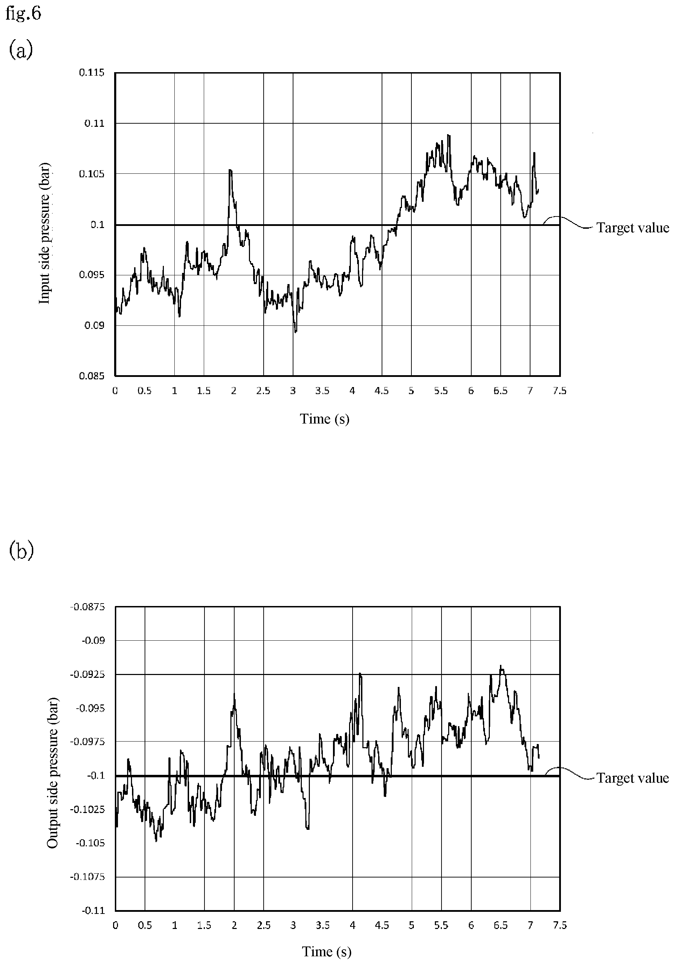

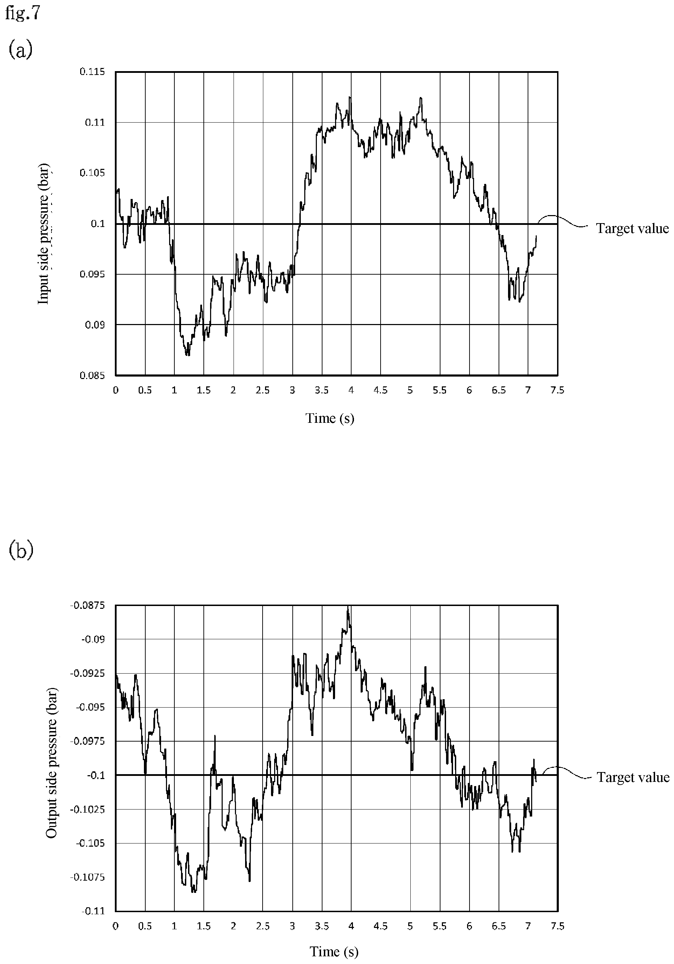

Fig. 6(a) shows the displacement of the pressure on the input side of the coating head 56 when the vehicle body FR is coated after deceleration of the coating head 56 at position P2; Fig. 6(b) shows the displacement of the pressure on the output side of the coating head 56 when the vehicle body FR is coated after deceleration of the coating head 56 at position P2. In addition, Fig. 7(a) shows the displacement of the pressure on the input side of the coating head 56 when the vehicle body FR is coated after deceleration of the coating head 56 at position P4; Fig. 7(b) shows the displacement of the pressure on the output side of the coating head 56 when the vehicle body FR is coated after deceleration of the coating head 56 at position P4.

Here, in the vehicle body FR, the pressure of the coating material flowing toward the coating head 56 is reduced to a target value of 0.1 bar, and the pressure of the coating material pumped out of the coating head 56 is reduced to a target value of -0.1 bar.

As shown in Figs. 6(a) and 6(b), when the vehicle body FR is coated after the coating head 56 has decelerated at position P2, the coating material pressure at the input side of the coating head 56 is changing within a range of 0.09 bar to 0.11 bar. In addition, the pressure of the coating material at the output side of the coating head 56 is changing within a range of -0.1050 bar to -0.0915 bar. It should be noted that these pressure changes are believed to be due to, for example, changes in the posture of the first and/or second rotary arms 22, 23 of the robot arm 15, inertia of the coating material due to deceleration of the coating head 56, and the like.

On the other hand, as shown in Figs. 7(a) and 7(b), when the vehicle body FR is coated after the coating head 56 has decelerated at position P4, the coating material pressure at the input side of the coating head 56 is changing within a range of 0.0875 bar to 0.1125 bar. In addition, the pressure of the coating material at the output side of the coating head 56 is changing within a range of -0.10875 bar to -0.0875 bar. At this time, for example, three seconds after the start of coating, the result was that a large change in pressure was observed. In addition, in this case, the pressure changes are large. This is believed to be due to the start of coating, with the inertia, etc. of coating material not converging when the coating head 56 decelerates rapidly at position P4.

In other words, it was found that in a case when the coating head 56 decelerates at position P2, the change in coating material pressure at the input side and output side of the coating head 56 during coating is suppressed compared to the case when the coating head 56 decelerates at position P4. That is, as shown in Fig. 5, in front of the position P4 where the coating preparation by the coating head 56 starts (position P2), the movement speed of the coating head 56 is decelerated and the movement speed of the coating head 56 is regarded as the movement speed V2 when coating to the vehicle body FR. For example, when the moving coating head 56 decelerates, the pressure of the coating material supplied to the coating head 56 and the pressure of the coating material dispensed from the coating head 56 will change due to inertia of the coating material and vibration of the robot arm 15, but such speed control of the coating head 56 can converge the change in the pressure of coating material associated with the deceleration of the coating head 56 within a period of time until coating of the vehicle body FR begins. As a result, stable coating of the vehicle body FR can be performed without deteriorating the coating performance of the vehicle body FR by the coating head 56.

Moreover, although in this embodiment, the coating head 56 is decelerated at position P2, the position that decelerates the movement speed of the coating head 56 need not be limited to position P2, and for example, it is fine to be the position at which the pressure change associated with deceleration of the movement speed of the coating head 56 is converged before the coating by the coated head 56 starts.

In addition, in this embodiment, the coating head 56 is decelerated at position P2, and the vehicle body FR is coated by the coating head 56 while maintaining a decelerated movement speed. For example, the movement speed of the coated head 56 during the coating of the vehicle body FR is determined by the coating performance of the coating head 56 to a fixed speed. Therefore, it is also possible to speed up the movement speed of the coating head 56 to become the movement speed of the coating head 56 when the coating head 56 passes through position P2, for example, when position P3 or position P4 is reached, after deceleration to a speed slower than the movement speed of the coating head 56 when coating the vehicle body FR. According to this embodiment, the pressure variation of the coating material when slowed down is large, but the pressure change of the coating material before and after acceleration and the vibration of the robot arm 15 can be suppressed as much as possible, and the coating performance can be improved.

It is also possible to speed up the coating head 56 to a movement speed of the coating head 56 when coating the vehicle body FR at the position P2 or position P3 rather than slowing down the coating head 56 at position P2 (or position P3). In this case, the movement speed of the coating head 56 can be increased incrementally, so that the pressure change of the coating material during each acceleration and vibration of the robot arm 15 can be suppressed.

In this embodiment, the coating head 56 is decelerating at position P2, but can also be stopped for a predetermined time, for example at position P4. Moreover, the predetermined time is the time until the pressure change associated with the stop of the coating head 56 converges, for example, it can be set to 5 seconds. Moreover, the predetermined time may be set according to the movement speed as the coating head 56 moves from position P1 to position P4, or may be set based on measurement results of at least one of the pressure gauges 69, 72, 76, 79 of the coating material circulation device 51 described above.

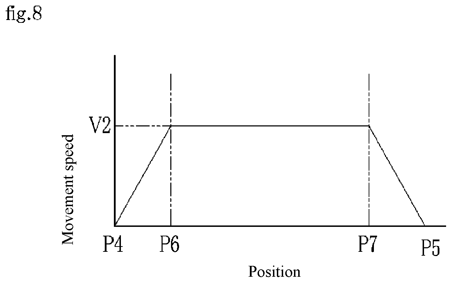

At this time, as shown in Fig. 8, when moving the coating head 56 along the forward path in the forward and backward movement in the main scanning direction, the coating head 56 is accelerated to be the desired movement speed (e.g., movement speed V2) at position P6 when moving from position P4 shown in Fig. 4(b) toward position P6. In addition, the coating head 56 is also decelerated to stop at position P5 after reaching position P7 shown in Fig. 4(b). It should be noted that the same is true when moving the coating head 56 along the backward path in the forward and backward movement in the main scanning direction, and when the coating head 56 is moved from position P5 toward position P7, it is accelerated at position P7 to achieve the desired movement speed, and after reaching position P6, it is slowed down to stop at position P5.

In this case, when the coating head 56 moves along the forward path in the forward and backward movement in the main scanning direction, position P4 is the coating start position and position P5 is the coating end position. Then, between position P6 and position P7, coating material dispensing is performed by multiple nozzles 61 of the coating head 56. In addition, when the coating head 56 moves along the backward path in the forward and backward movement in the main scanning direction, position P5 is the coating start position and position P4 is the coating end position. Then, between position P7 and position P6, coating material dispensing is performed by multiple nozzles 61 of the coating head 56.

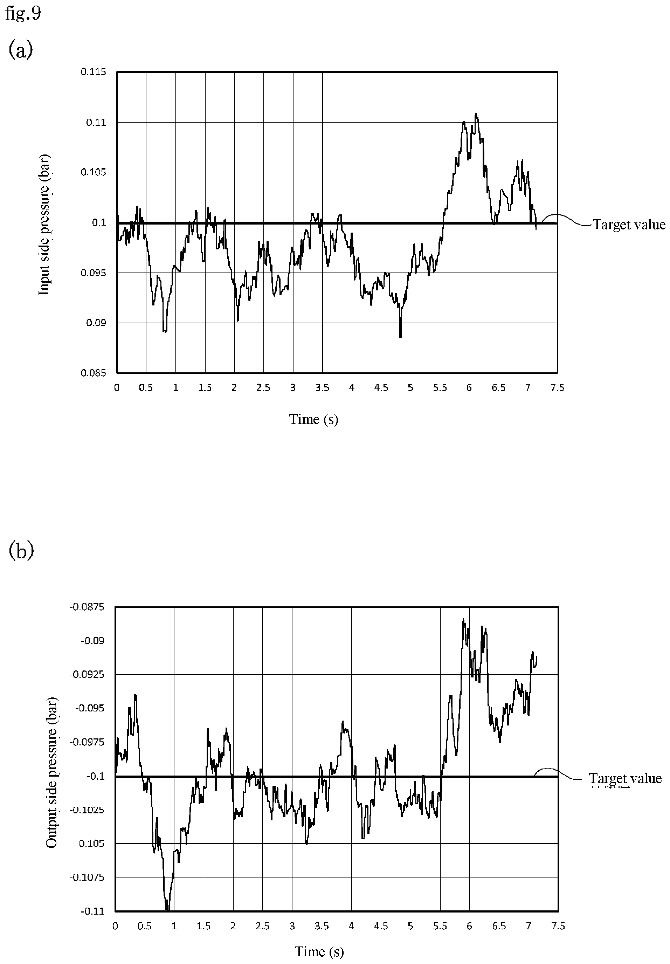

Fig. 9(a) is a diagram showing the change in pressure on the input side of the coating head 56 when the vehicle body FR is coated after the coating head 56 is stopped at position P4 for 5 seconds. In addition, Fig. 9(b) is a diagram showing the change in pressure on the output side of the coating head 56 when the vehicle body FR is coated after the coating head 56 is stopped at position P4 for 5 seconds. Moreover, in this case as well, the target pressure on the input side of the coating head 56 is 0.1 bar, and the target pressure on the output side of the coating head 56 is -0.1 bar.

As shown in Fig. 9(a), the pressure of the coating material at the input side of the coating head 56 is changing within a range of 0.0875 bar to 0.1125 bar. In addition, as shown in Fig. 9(b), the coating material pressure at the output side of the coating head 56 is changing within a range of -0.11 bar to -0.0875 bar. As shown in Figs. 7(a) and 7(b), when coating of the vehicle body FR is performed by deceleration when the coating head 56 reaches position P4 from position P1, the coating material pressure at the input side of the coating head 56 is changing within a range of 0.0875 bar to 0.1125 bar. In addition, the pressure of the coating material at the output side of the coating head 56 is changing within a range of -0.10875 bar to -0.0875 bar.

After stopping the coating head 56 at position P4 for 5 seconds, the posture of the robot arm 15 is changed in order to move the coating head 56 when coating is performed, so it was found that the pressure of the coating material associated with the change in the posture of the robot arm 15 changes when coating by the coating head 56 is started, but the pressure of the coating material on the input side and output side of the coating head 56 is suppressed compared to the case of coating the vehicle FR at position P4. Therefore, it can also be found that reducing pressure fluctuations in the interior of the coating material circulation device 51 associated with the movement of the coating head 56 is effective by coating the vehicle body FR while moving the coating head 56 at a speed lower than the movement speed when moving the coating head 56 to the position P4 after moving the coating head 56 to position P4 and stopping it for a predetermined time at that position P4.

It should be noted that while we explained the case of moving along the forward path in the main scanning direction after stopping the coating head 56 at position P4 for a predetermined time, it is also possible to stop the coating head 56 at position P5 for a predetermined time in the same manner when moving along the backward path in the main scanning direction. At this time, the coating head 56 will be moved a predetermined distance in the sub-scanning direction when switching from the movement along the backward path in the main scanning direction to the movement along the forward path in the main scanning direction, but the speed when moving the coating head 56 in the sub-scanning direction may be either slower than the movement speed when coating the vehicle body FR or faster than the movement speed when coating the vehicle body FR. In addition, when coating multiple vehicle body FR simultaneously using multiple coating robots 10, or when coating one vehicle body FR using multiple coating robots 10, there is a possibility that the coating head 56 provided in each robot arm 15 will collide when each robot arm 15 is driven. To prevent, for example, collisions of the coating head 56 provided on each robot arm 15, the movement speed of the coating head 56 may be varied before and after the retraction position if there is a retraction position in the movement trajectory of the coating head 56 from the end of the movement along the forward path in the main scanning direction until the movement along the backward path in the main scanning direction begins (or vice versa).

In this embodiment, the movement speed of the coating head 56 is slowed down or stopped temporarily at position P4 prior to reaching position P4 so that the pressure changes that occur with the movement of the coating head 56 by the robot arm 15 do not affect the coating of the vehicle body FR by the coating head 56. However, in the coating of the vehicle body FR using the coating robot 10, the drive of the robot arm 15 may cause the coating head 56 to vibrate and cause the coating material to be ejected from the multiple nozzles 61 provided at the nozzle forming surface 56a of the coating head 56 to shift the landing position. In order to prevent such an event, it is also possible to provide a means for detecting vibration in the second rotary arm and a means for imparting vibration to the second rotary arm that offsets the vibration detected by the said detection means or imparts vibration that is in reverse phase of the detected vibration.

### (Effects)

The robot 10 for coating the vehicle body of this invention has a coating head 56 that dispenses coating material onto the vehicle body FR; a coating material circulation device 51 that has a supply path 57 and a return flow path 58 for circulating the coating material between a coating material tank 55 for storing the coating material and a coating head 56, and that is capable of controlling the pressure of the coating material flowing in the circulation path comprising the supply path 57 and the return flow path 58; and a robot arm 15 having a coating head 56 and a coating material circulation device 51; and the coating of the vehicle body FR is performed while the coating head 56 is moved in the main scanning direction by the movement of the robot arm 15; it has an arm control unit 102 for controlling operation of the robot arm 15; and the coating head 56 moves at a first speed toward the coating start position (position P4) where the coating of the vehicle body FR is started by the movement of the arm by the control means, and when it reaches a specific position (position P2) provided in the movement path to the coating start position, it moves at a second speed different from the first speed.

For example, the coating head 56 is held in a preset initial position (position P1) when the vehicle body FR is not coated, and when a new vehicle body FR is coated, the robot arm 15 moves from the initial position toward the coating start position. Moreover, when operation of the robot arm 15 is started, the coating material circulation device 51 and coating head 56 provided in the robot arm 15 are affected by the acceleration at the start of operation of the robot arm 15, and the pressure of the coating material flowing through the supply path 57 and return flow path 58 of the coating material circulation device 51 varies. In addition, at the same time, the robot arm 15 itself also vibrates. As a result, the supply of coating material to the coating head 56 becomes unstable, causing variations in the amount of coating material dispensed from the multiple nozzles 61 provided on the coating head 56. In addition, this can also cause the landing position of the coating material dispensed with multiple nozzles or 61 provided on the coating head 56 to become disordered.

In this invention, when the coating head 56 is moved, for example, to a specific position (position P2) provided in the movement path of the coating head 56 from the initial position to the coating start position, the movement speed of the coating head 56 is changed to a different movement speed to move to the coating start position. Such control can converge the pressure fluctuations of the coating material flowing through the coating material circulation device 51 and the vibrations of the robot arm 15 itself while the coating head 56 moves to the coating start position. This not only stabilizes the coating material supply to the coating head 56 and prevents variations in the amount of coating material ejected from the multiple nozzles 61 provided on the coating head 56 but also inhibits disorder of the landing position of the coating material ejected from the multiple nozzles 61 provided on the coating head 56. As a result, in the coating of the vehicle body FR by the coating head 56, deterioration of the coating quality can be inhibited.

It should be noted that by setting the second speed below the first speed or setting the first speed below the second speed, the change in coating material pressure associated with the change in movement speed can be prevented from affecting coating by the coating head 56.

Also, the coating head 56 starts coating the vehicle body FR while maintaining the second speed when the coating start position is reached.

According to this configuration, the movement speed of the coating head 56 after passing through a specific position is maintained constant. In other words, the impact of pressure fluctuations caused by deceleration at a specific position is suppressed at the coating start position, and it is possible to coat the vehicle body FR while maintaining that state. As a result, in the coating of the vehicle body FR by the coating head 56, deterioration of the coating quality can be inhibited.

In addition, the coating head 56 moves forward and backward multiple times in the main scanning direction and moves a predetermined amount in a sub-scanning direction orthogonal to the main scanning direction upon switching the forward and backward movement in the main scanning direction; and the coating start position is provided at each of the forward path and backward path in a forward and backward movement of the main scanning direction.

According to this invention, during the switching of forward and backward movement in the main scanning direction, the change in pressure during the shifting in the sub-scanning direction orthogonal to the main scanning direction and the vibrations caused by the change in the posture of the robot arm 15 can be prevented from affecting the coating using the coating head 56.

At this time, the coating head 56 is moved at a third speed that is slower than the second speed when moving a predetermined amount in the sub-scanning direction.

According to this invention, the change in pressure when moving a predetermined amount in a sub-scanning direction orthogonal to the main scanning direction can be reduced, so coating using the coating head 56 can be performed stably.

In addition, the robot 10 for coating the vehicle body of this invention has a coating head 56 that dispenses coating material onto the vehicle body FR; a coating material circulation device 51 that has a supply path 57 and a return flow path 58 for circulating the coating material between a coating material tank 55 for storing the coating material and a coating head 56, and that is capable of controlling the pressure of the coating material flowing in the circulation path comprising the supply path 57 and the return flow path 58; and a robot arm 15 having a coating head 56 and a coating material circulation device 51; and the coating of the vehicle body FR is performed while the coating head 56 is moved in the main scanning direction by the movement of the robot arm 15; it has an arm control unit 102 for controlling operation of the robot arm 15; the coating head 56 is moved to the coating start position (position P6) where the coating of the vehicle body FR is started by control of the robot arm 15 by the arm control unit 102, stopped temporarily and then resumes movement from the coating start position to the main scanning direction after a predetermined time has elapsed after stopping at the coating start position to perform coating of the vehicle body FR, and the movement speed of the coating head 56 when coating the vehicle body FR is set to a movement speed different from the movement speed of the coating head 56 when moving to the coating start position.

For example, when operation of the robot arm 15 is initiated, the coating material circulation device 51 and coating head 56 provided in the robot arm 15 are affected by acceleration at the start of operation of the robot arm 15, causing the pressure of the coating material flowing through the supply path 57 and return flow path 58 of the coating material circulation device 51 to vary. In addition, at the same time, the robot arm 15 itself also vibrates. As a result, the supply of coating material to the coating head 56 becomes unstable, causing variations in the amount of coating material dispensed from the multiple nozzles 61 provided on the coating head 56. In addition, the landing position of the coating material dispensed from the multiple nozzles 61 provided on the coating head 56 is disrupted.

In this invention, the coating head 56 moved from the initial position to the coating start position is temporarily stopped at the coating start position to converge the pressure fluctuation of the coating material flowing through the coating material circulation device 51 and the vibration of the robot arm 15 itself. Coating head 56 stopped at coating start position will start coating after a certain period of time has elapsed. At this time, the coating head 56 will move along the main scanning direction from the coating start position, but the movement speed is set to be slower than the movement speed of the coating head 56 from the initial position to the coating start position. Thus, the pressure variation of the coating material flowing through the coating material circulation device 51 is less than the pressure variation when the coating head 56 moves from the initial position toward the coating start position. This can stabilize coating material supply to the coating head 56 and not only reduce the variation in the amount of coating material dispensed from the multiple nozzles 61 provided on the coating head 56 but also reduce disorder of the landing position of the coating material dispensed from the multiple nozzles 61 provided on the coating head 56. As a result, in the coating of the vehicle body FR by the coating head 56, deterioration of the coating quality can be suppressed.

In addition, the coating head 56 moves forward and backward multiple times in the main scanning direction and moves a predetermined amount in a sub-scanning direction orthogonal to the main scanning direction upon switching the forward and backward movement in the main scanning direction; the coating start position is provided at each of the forward path and backward path in a forward and backward movement in the main scanning direction; and the coating head is temporarily stopped at the coating start position provided at each of the forward path and backward path.

According to this invention, it is possible to stabilize the coating material supply to the coating head 56 and not only reduce the variation in the amount of coating material dispensed from the multiple nozzles 61 provided on the coating head 56 but also reduce disorder of the landing position of the coating material dispensed from the multiple nozzles 61 provided on the coating head 56. As a result, in the coating of the vehicle body FR by the coating head 56, deterioration of the coating quality can be suppressed.

In addition, the coating head 56 is held at the initial position when the coating of the vehicle body FR is not being performed, and the arm control unit 102 is to control the operation of the robot arm 15 in response to the start of coating on the vehicle body FR to move the coating head 56 from the initial position to the coating start position.

According to this configuration, when the vehicle body FR is not coated, the coating head 56 is held at an initial position away from the vehicle body FR, so that the occurrence of events such as contact of the coating head 56 with the coated body or the uncoated body FR can be prevented.

In addition, it also includes a supply path 57 that supplies coating material stored in a coating material tank 55 to a coating head 56, a return flow path 58 that returns coating material not used by the coating head 56 to the coating material tank 55, and the coating material circulation device 51 includes a gear pump 62 that pumps coating material stored in the coating material tank 55 to the supply path 57, a gear pump 80 that draws coating material from the coating head 56 to the return flow path 58, a pressure gauge 69 that detects the pressure of coating material dispensed to the supply path 57, a pressure gauge 79 that detects the pressure of coating material drawn to the return flow path 58, and a coating material supply control unit 103 for controlling the dispensing amount of the coating material by the gear pump 62 based on a detection result by the pressure gauge 69 and for controlling the drawing amount of the coating material by the gear pump 80 based on a detection result by the pressure gauge 79.

According to this invention, during operation of the robot arm 15, the gear pumps 62, 80 can be controlled based on the pressure of the coating material fed into the supply path 57 of the coating material circulation device 51 and the pressure of the coating material drawn into the return flow path 58, so that the pressure of the coating material in each flow path can be kept at the proper pressure. That is, the supply of coating material to the coating head 56 by the coating material circulation device 51 can be stably performed.

### DESCRIPTION OF REFERENCE NUMERALS

- 10: coating robot (robot for coating a vehicle body )
- 15: robot arm
- 21: base (base unit)
- 22: first rotary arm
- 23: second rotary arm
- 51: coating material circulation device (supply device)
- 55: coating material tank (reservoir)
- 56: coating head
- 57: supply path
- 58: return flow path (reflux path)
- 62: gear pump (dispensing method)
- 69: pressure gauge (first detection means)
- 79: pressure gauge (second detection means)
- 80: gear pump (retraction means)
- 102: arm control unit (control means)
- 103: coating material supply control unit (pressure control means)

## Claims

1. A robot for coating a vehicle body,
which has a coating head configured for dispensing a coating material onto the vehicle body;
a supply device that has a circulation path for circulating the coating material between a reservoir storing the coating material and the coating head, and that is capable of controlling the pressure of the coating material flowing through the circulation path; and
an arm having the coating head and the supply device;
and being a robot for coating a vehicle body that coats the vehicle body while moving the coating head in a main scanning direction by operation of the arm, wherein:
the robot has a control means for controlling operation of the arm;
and the coating head moves at a first speed toward a coating start position where the coating of the vehicle body is started by the movement of the arm by the control means, and
when the coating head reaches a specific position provided in the movement path to the coating start position, the coating head moves at a second speed different from the first speed.

2. A robot for coating a vehicle body as described in Claim 1, wherein:
the second speed is set below the first speed.

3. A robot for coating a vehicle body as described in Claim 1, wherein:
the first speed is set below the second speed.

4. A robot for coating a vehicle body as described in any of the preceding claims, wherein:
when the coating head reaches the coating start position, coating of the vehicle body is started while maintaining the second speed.

5. A robot for coating a vehicle body as described in any of the preceding claims, wherein:
the coating head moves forward and backward multiple times in the main scanning direction and moves a predetermined amount in a sub-scanning direction orthogonal to the main scanning direction upon switching the forward and backward movement in the main scanning direction;
and the coating start position is provided at each of the forward path and backward path in the forward and backward movement of the main scanning direction.

6. A robot for coating a vehicle body as described in Claim 5, wherein:
the coating head is moved at a third speed that is slower than the second speed when moving a predetermined amount in the sub-scanning direction.

7. A robot for coating a vehicle body,
which has a coating head configured for dispensing a coating material onto the vehicle body;
a supply device that has a circulation path for circulating the coating material between a reservoir storing the coating material and the coating head, and that is capable of controlling the pressure of the coating material flowing through the circulation path; and
an arm having the coating head and the supply device;
and being
a robot for coating a vehicle body that coats the vehicle body while moving the coating head in a main scanning direction by operation of the arm, wherein:
the robot has a control means for controlling operation of the arm;
the coating head is moved to a coating start position to start coating of the vehicle body by controlling the arm by the control means, stopped temporarily and then resumes movement from the coating start position to the main scanning direction after a predetermined time has elapsed since stopping at the coating start position to perform coating of the vehicle body,
and the movement speed of the coating head when coating the vehicle body is set to a movement speed different from the movement speed of the coating head when moving to the coating start position.

8. A robot for coating a vehicle body as described in Claim 7, wherein:
the coating head moves forward and backward multiple times in the main scanning direction and moves a predetermined amount in a sub-scanning direction orthogonal to the main scanning direction upon switching the forward and backward movement in the main scanning direction;
the coating start position is provided at each of the forward path and backward path in a forward and backward movement in the main scanning direction; and
the coating head is temporarily stopped at the coating start position provided at each of the forward path and backward path.

9. A robot for coating a vehicle body as described in any of the preceding claims, wherein:
the coating head is held at an initial position when not coating the vehicle body;
and the control means controls operation of the arm to move the coating head from the initial position to the coating start position upon initiation of coating to the vehicle body.

10. A robot for coating a vehicle body as described in any of the preceding claims, wherein:
the circulation path includes a supply path for supplying the coating material stored in the reservoir to the coating head and a return flow path for refluxing the coating material not used by the coating head to the reservoir;
and the coating device has
a dispensing means for feeding the coating material stored in the reservoir to the supply path;
a retracting means for drawing the coating material from the coating head into the return flow path;
a first detection means for detecting the pressure of the coating material fed to the supply path;
a second detection means for detecting the pressure of the coating material drawn into the return flow path;
a pressure control means for controlling a dispensing amount of the coating material by the dispensing means based on the detection result by the first detection means and for controlling the drawing amount of the coating material by the retracting means based on a detection result by the second detection means.
